# EUROPÄISCHE PATENTSCHRIFT

(11) **EP 1 593 542 B1**
(45) Veröffentlichungstag und Bekanntmachung des Hinweises auf die Patenterteilung: **24.06.2009**
(21) Anmeldenummer: 05450078.0
(22) Anmeldetag: 28.04.2005
(51) Int. Cl.: B60N 2/005, B60N 2/24

(54) **Sitz für ein gepanzertes Fahrzeug**
Seat for armoured vehicle
Siège pour véhicule cuirassé

(30) Priorität: 06.05.2004 AT 7762004
(43) Veröffentlichungstag der Anmeldung: 09.11.2005
(73) Patentinhaber: Steyr-Daimler-Puch Spezialfahrzeug GmbH, 1110 Wien (AT)
(72) Erfinder: Kumpf, Bernhard, Ing., 2401 Fischamend (AT); Strassgürtl, Anton, Ing., 2432 Schwadorf (AT); Skoff, Gerhard, Dipl.-Ing., 1230 Wien (AT)
(74) Vertreter: Rippel, Andreas

(56) Entgegenhaltungen:
- EP-A- 1 293 378
- WO-A-02/103275
- DE-A1- 3 910 854
- DE-A1- 10 130 631
- DE-U1- 20 312 277
- GB-A- 795 517
- US-A- 2 829 702
- US-A- 3 314 720
- US-A- 3 968 994
- US-A- 3 985 388
- US-B1- 6 378 939

## Beschreibung

Die Erfindung bezieht sich auf einen Sitz für ein gepanzertes Fahrzeug, der zum Schutz gegen Landminen an einer oberen Aufhängung befestigt ist und einen Sitzbezug sowie ein Rückhaltesystem aufweist.

Landminen sind aufgrund ihrer extrem hohen Zerstörungskraft verbunden mit einem häufigen Vorkommen in Krisen- und Kriegsgebieten eine große Gefahr für Fahrzeuge und deren Besatzung. Da insbesondere bei friedenssichernden Einsätzen die Wahrscheinlichkeit auf Minen aufzufahren hoch ist, werden auch bei leicht gepanzerten Fahrzeugen höchste Anforderungen an den Schutz gegen Landminen gestellt.

Ein effektiver Schutz für die Mannschaft hängt wesentlich von der Gestaltung der Sitze und deren Befestigung im gepanzerten Fahrzeug ab. Eine Befestigung der Sitze am Boden bzw. an der Seitenwand ist für eine minengeschützte Ausführung untauglich, da bei einer Minendetonation der Fahrzeugboden so sehr beschleunigt wird, daß die auf die Insassen übertragenen Kräfte ein Vielfaches der physiologisch zulässigen Beschleunigung beträgt. Zum Schutz der Insassen ist es unbedingt erforderlich, daß die Sitzbefestigung am Fahrzeugdach erfolgt, wo die durch die Minendetonation verursachte Vertikalbeschleunigung wesentlich geringer ist als am Fahrzeugboden, da der Fahrzeugboden durch die unmittelbare Krafteinwirkung des Detonationsdruckes zusätzlich hochdynamisch elastisch und plastisch verformt wird.

In EP 1382932 A1 ist ein Sicherheitssitzsystem beschrieben, das auf diese erforderliche Entkoppelung der Sitze vom Fahrzeugboden und von der Seitenwand Rücksicht nimmt, indem der Sitz vom Fahrzeugdach abgehängt und gegen den Fußboden verspannt wird. Derartige Sitze haben aber den wesentlichen Nachteil, dass sie ihren Schutz nur bei unverformter Bodenstruktur beibehalten. Aufgrund der erheblichen dynamischen Durchbeulung der Bodenstruktur kann der Sitz seine durch die gespannten Gurte vorgegebene Fixierung verlieren, und damit auch seine starre Form, da die am Boden befestigten Gurte gelockert werden. Diese Lockerung der Spanngurte nimmt dem Sicherheitssitzsystem seine zur Schutzfunktion erforderliche steife Form, und das Sitzsystem kann die zur Schutzfunktion erforderliche aufrechte Sitzhaltung in Bezug auf die Beschleunigungsrichtung nicht mehr gewährleisten, sodass im schlimmsten Falle die Insassen sogar mitsamt ihrem Sitz, trotz eines intakten Rückhaltesystems, gegen die Fahrzeugdecke geschleudert werden.

Ähnliche Sicherheitssitzsysteme sind in US 3,868,143, in DE 4303719 A1 und in US 2,829,702 beschrieben.

In der US 6,378,939 B1 ist ein Sitz entsprechend dem Oberbegriff des Anspruchs 1 beschrieben, der an einem Gestänge befestigt ist, das an der Seitenwand, insbesondere eines Hubschraubers, angebracht ist, aber auch an der Decke oder dem Boden befestigt werden kann. Das Gestänge wirkt mit einem Dämpfungssystem zusammen, das eine Biegeeinrichtung umfaßt. Dadurch soll eine Dämpfung der, z.B. bei einem Unfall, auftretenden Energie erreicht werden, auch wenn verschieden schwere Personen den Sitz benützen.

Ziel vorliegender Erfindung ist die Schaffung eines Sitzes der eingangs genannten Art, bei dem die Krafteinwirkung auf die Fahrzeugbesatzung im Falle einer Minendetonation minimiert ist, sodaß die Insassen in bestmöglicher Weise vor Verletzungen geschützt sind.

Erreicht wird dies durch die kennzeichnenden Merkmale des Anspruchs 1.

Bei einem erfindungsgemäß ausgebildeten Sitz fehlt jegliche Verspannung zum Boden, sodaß sich eine Verformung des Bodens nicht auf den Sitz und insbesondere seine Insassen auswirkt. Trotzdem ist zufolge der elastischen Aufhängungsgurte eine sichere Befestigung des Sitzes gewährleistet.

Weitere Merkmale der Erfindung sind in den Unteransprüchen gekennzeichnet.

Nachstehend ist die Erfindung anhand von in den Zeichnungen dargestellten Ausführungsbeispielen näher beschrieben. Dabei zeigen:

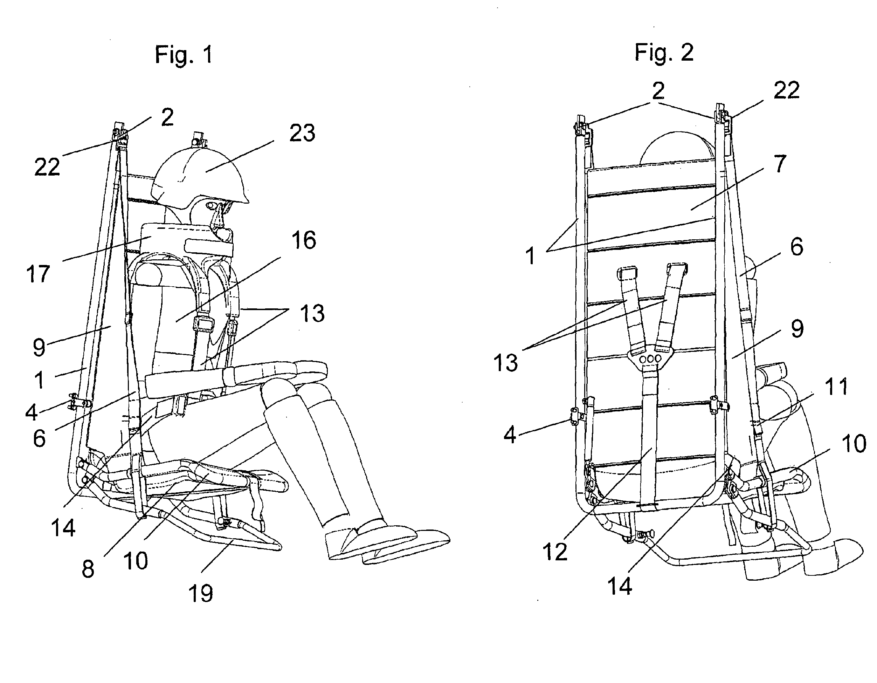

Fig. 1 eine schaubildliche Ansicht eines erfindungsgemäßen Sitzes von schräg vorne;
Fig. 2 den in Fig. 1 gezeigten Sitz in einer Ansicht von schräg hinten;

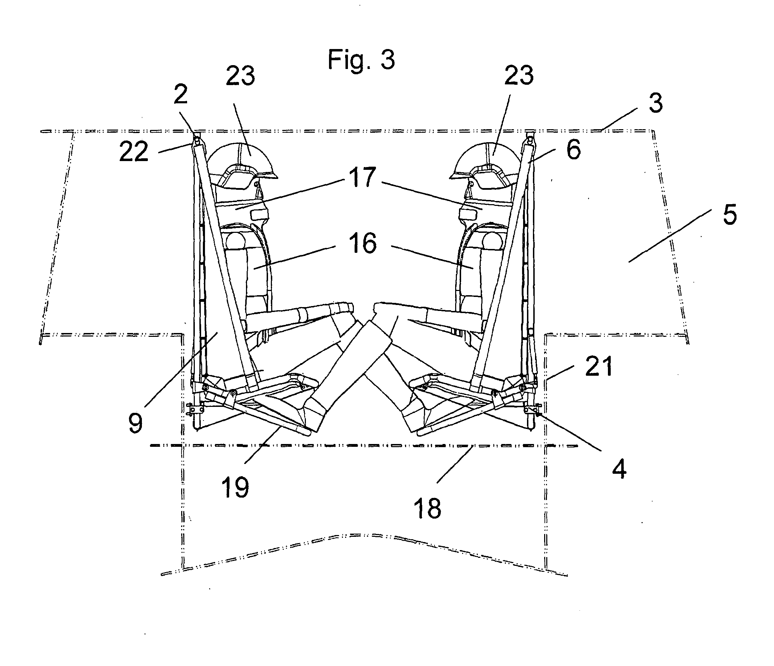

Fig. 3 die Anordnung der Sitze in einem Fahrzeug;
Fig. 4 die Führung des Aufhängegestänges;
Fig. 5 die obere Befestigung des elastischen Gurtes;
Fig. 6 und 7 unterschiedlich ausgezogene Fußstützen.

Gemäß den Zeichnungen wird der Sitz von einem Aufhängungsgestänge 1 geführt, das mittels einer gelenkigen Aufhängung 2 am Fahrzeugdach 3 befestigt ist. Eine Kraftübertragung kann somit in beidseitiger Gestängerichtung erfolgen.

Zur Seitenführung ist jedes Aufhängungsgestänge 1 mit einer Lagerstelle 4 versehen, welche mit der Seitenwand 21 des Fahrzeuges 5 fest verbunden ist. Die Ausführung dieser Lagerstelle 4 ist so gestaltet, daß auf keinen Fall eine Verklemmung in der Fahrzeughochachse auftreten kann und damit sichergestellt wird, daß keine Vertikalkräfte in das Aufhängungsgestänge 1 eingeleitet werden können. Es können nur seitliche Kräfte übertragen werden, aber es dürfen keine Kräfte von der Bodenseite in Richtung Aufhängungsgestänge 1, wie sie typischerweise bei einer Minendetonation unter dem Fahrzeug auftreten, in den Sitz geleitet werden. Um seitlich auf den Sitz wirkende Kräfte ebenfalls elastisch einzuleiten, ist die Lagerstelle 4 deutlich außerhalb des Schwerpunktes des belasteten Sitzes gelegt, um durch die elastische Verformung des Aufhängungsgestänges 1 die über die Lagerstelle 4 von der Seitenwand 21 eingeleiteten Kräfte entsprechend zu federn.

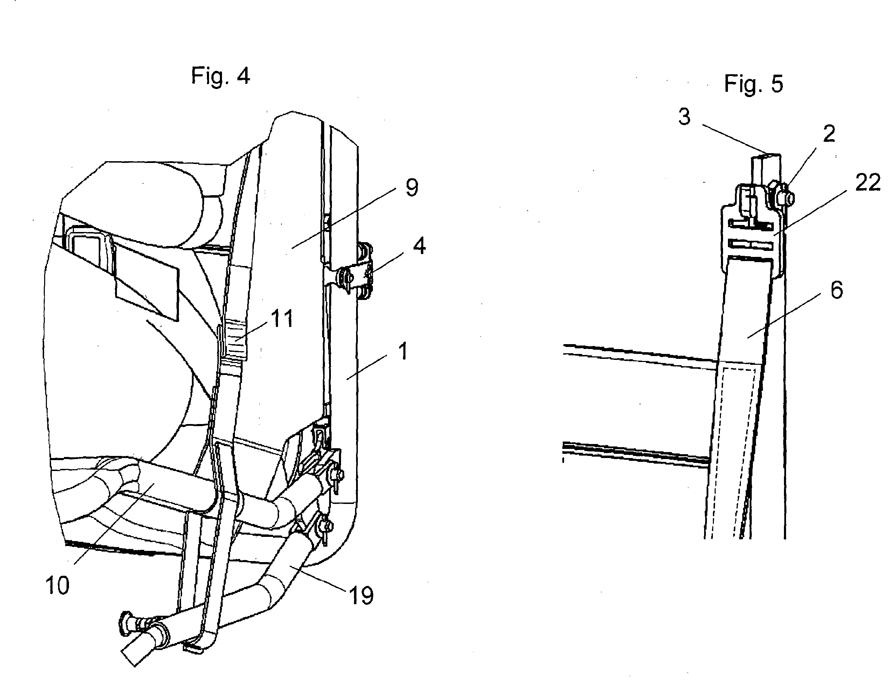

Fig. 4 zeigt eine bevorzugte Ausführung dieser Seitenführung 4 mittels Rollen, die eine exakte und nahezu spielfreie Führung erlaubt; ebenso kann die Führung aber auch mit beliebigen anderen Führungseinrichtungen, zum Beispiel einem Band, oder mit entsprechenden Gurten, beispielsweise diagonal zur Seitenwand abgespannt, erreicht werden.

Für einen besseren Sitzkomfort und besondere Sicherheit sorgt die speziell geformte Sitzbespannung. Die Sitzbespannung besteht im Wesentlichen aus zwei elastischen Gurten 6 und aus dem Sitzbezug, der aus der Rückenlehne 7, der Sitzfläche 8 und den zwei Seitenführungswangen 9, die vorzugsweise alle miteinander verbunden, vorzugsweise vernäht sind, besteht. Dieser Sitzbezug besteht aus einem elastischen Material, vorzugsweise Textil, in das zur Erhöhung des individuellen Personenschutzes je nach Anforderung zusätzlich ein ein- oder mehrlagiges Splitterschutzmaterial eingebracht werden kann. Vorzugsweise wird die Rückenlehne 7 so gestaltet, daß sie aufgrund ihrer Höhe gleichzeitig als Kopfstütze dient.

Der elastische Gurt 6 wird, wie beispielhaft in Fig. 5 dargestellt ist, mit dem oberen Ende 22 abnehmbar am Fahrzeugdach 3 befestigt, und ist mit der Sitzbespannung, speziell mit der Seitenführungswange 9 vernäht. Die Sitzbespannung ist mit ihrer Sitzfläche 8 auf dem ergonomisch geformten Sitzrahmen 10 befestigt.

Bei einer Minendetonation unter dem Fahrzeug 5 werden die Insassen 16 in die ergonomisch ausgeformte Sitzbespannung hineingedrückt, die aufgrund des elastischen Materials die Beschleunigungskraft, die auf die Insassen 16 zum Wirken kommt, reduziert. In die Gegenrichtung werden die Insassen 16 durch den Sicherheitsgurt gehalten. Der gesamte Sitz stützt sich über das Gestänge 1 vom Fahrzeugdach 3 ab und wird über die Seitenführungen 4 in Position gehalten.

Der Sitzrahmen 10 wird durch den elastischen Gurt 6, der am Fahrzeugdach 3 an der Aufhängung 2 befestigt ist, in seiner untersten Stellung begrenzt, und wird automatisch bei Nichtbenützung des Sitzes zusammen mit der Sitzbespannung mittels einer Feder (nicht dargestellt) nach oben geklappt. Die vertikale Aufwärtsbeschleunigung der Insassen 16 wird im Wesentlichen durch die Sitzfläche 8 abgestützt und durch den elastischen Gurt 6 gehalten.

Um ein Überschreiten der physiologisch zulässigen Belastungsgrenzen des menschlichen Körpers im Falle einer Minendetonation unter dem Fahrzeug 5 zu verhindern, kann dieser Gurt 6 zusätzlich mit einer oder mehreren S-förmigen Schlingen 11 (Fig. 5), mit einer definierten Reißfestigkeit verarbeitet, vorzugsweise vernäht oder verklebt werden, um im Falle der drohenden Überschreitung dieser Grenzwerte unter voller Beibehaltung der Schutz- und Stützfunktion für die Insassen 16 eine energieverzehrende Sollbruchstelle einzubauen. Damit wird der Betrag der Beschleunigung für die Insassen 16 zusätzlich herabgesetzt. Durch die Verlängerung des Gurtes 6, der mit den Seitenführungswangen 9 mit einer im Bereich der S-Schlingen 11 unterbrochenen Vernähung verbunden ist, wird beim Aufreißen der S-Schlinge 11 die Beschleunigungskraft auf das Gewebe der Seitenführungswangen 9 übertragen, die in weiterer Folge energieverzehrend aufreißen, was zu einer weiteren Verstärkung dieses gewünschten energieabsorbierenden Effektes führt.

Die Unterseite der Sitzfläche 8 kann zusätzlich mit einer Verstautasche ausgestattet werden.

Um die Insassen 16 im Sitz zu fixieren, ist der Sitz mit einem Gurtrückhaltesystem 12 ausgestattet. Die Fixierung der Insassen 16 im Sitz erfolgt sowohl mit einem Hosenträger- 13 als auch mit einem Bauchgurt 14. Die Befestigung des Gurtrückhaltesystems erfolgt am vorderen Sitzflächenrahmen 10 und wird an einer Verbindungsstange 15 zwischen den beiden Aufhängungsgestängen 1 umgelenkt. Durch diese Kombination erreicht man die gewünschte Rückhalteeigenschaft der Insassen 16, weil die Sicherheitsgurte 12, 13, 14 die Insassen 16 im Sitz fixieren, und durch das Gestänge 1 auch eine nach oben wirkende Kraft übertragen werden kann.

Im Falle der nach oben gerichteten Beschleunigungskraft ist der Kopf bzw. die Halswirbelsäule der Insassen 16 besonders gefährdet, umso mehr, wenn ein Schutzhelm 23 getragen wird. Erfindungsgemäß wird dem Rechnung getragen, daß eine einfach abzunehmende Kopfstütze 17 aus einem elastischen Material, z.B. einem Kunststoffformschaum, in solcher Weise in den Hosenträgergurt 13 integriert wird, daß sie bei Bedarf wie ein schützender Kragen um den Hals des Insassen 16 gelegt wird, der den Kopf vor seitlichem Abknicken schützt. Wird der Schutzkragen nicht verwendet, kann er in einfacher Weise abgenommen und separat verstaut werden.

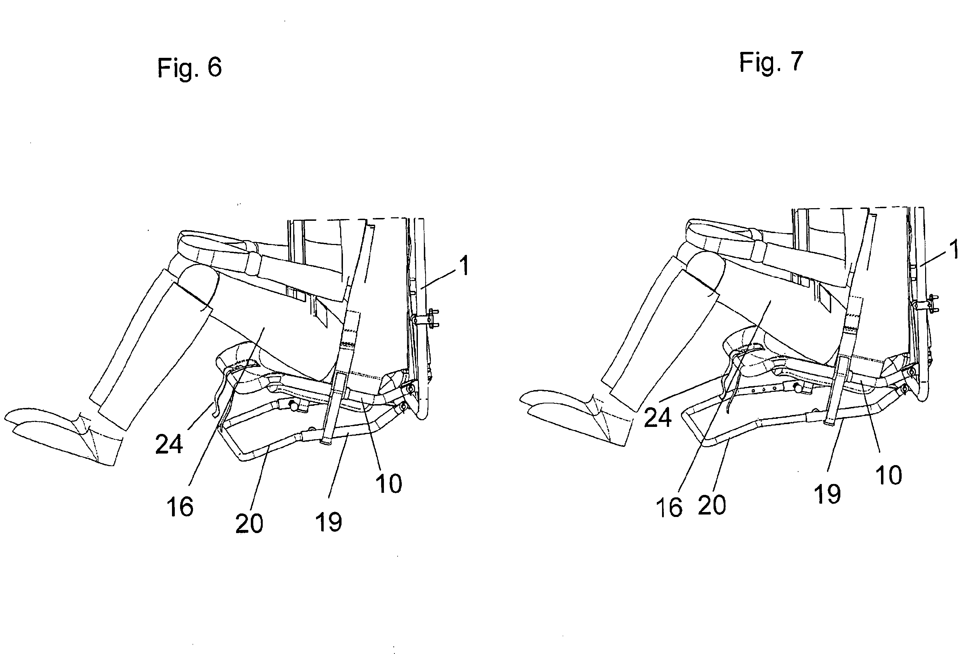

Um eine vollständige Entkoppelung der Insassen 16 vom Fahrzeugboden 18 zu bewirken, ist der Sitz zusätzlich mit einer klappbaren Fußstütze 19, die mit dem Sitzrahmen 10 und dem Gestänge 1 verbunden ist, ausgestattet. Bei geeigneter Wahl der Sitzanordnung im Fahrzeug 5 können die jeweils gegenüber sitzenden Insassen 16 ihre Füße auf der Fußstütze 19 abstützen, und haben damit auch mit den Beinen keinen Kontakt mehr zum Fahrzeugboden 18. Im Falle, daß die Sitzanordnung im Fahrzeug 5 einen zu großen Abstand zwischen den einzelnen Sitzen zur Nutzung der Fußstützen 19 ergibt, können diese mit einem teleskopartigen Auszug 20, der an den Abstand der Sitze angepasst ist, versehen werden. Fig. 6 und 7 zeigen zwei mögliche Ausführungen mit unterschiedlicher Ausziehlänge der Fußstützen. Bei Nichtverwendung der Fußstütze 19 kann diese in platzsparender Weise einfach hochgeklappt und z.B. mit einem Klettband 24 am Sitzrahmen 10 fixiert werden.

## Patentansprüche

1. Sitz für ein gepanzertes Fahrzeug, der zum Schutz gegen Landminen eine obere Aufhängung (2), einen Sitzbezug (6,7,8,9), ein Rückhaltesystem (12) und ein vom Fahrzeugboden (18) vollkommen entkoppeltes Aufhängungsgestänge (1) aufweist, welches in vertikaler Richtung seitlich geführt ist, wobei der Sitzbezug (6,7,8,9) eine Sitzfläche (8) und eine Rückenlehne (7) aufweist und wobei auf dem Aufhängungsgestänge (1) ein U-förmiger Sitzrahmen (10) gelenkig gelagert ist, über den die Sitzfläche (8) des Sitzbezuges gespannt ist, **dadurch gekennzeichnet, dass** das Aufhängungsgestänge (1) mittels einer gelenkigen Aufhängung (2) am Fahrzeugdach (3) befestigbar ist, dass der Sitzbezug zwei seitliche Wangen (9) und damit vernähte elastische Aufhängungsgurte (6) aufweist, und dass der U-förmige Sitzrahmen durch die elastischen Aufhängungsgurte (6) des Sitzbezuges (6,7,8,9), die mittels der Aufhängung (2) am Fahrzeugdach (3) befestigbar sind, in seiner untersten Stellung begrenzt wird.

2. Sitz nach Anspruch 1, **dadurch gekennzeichnet, dass** der Sitzbezug (6, 7, 8, 9) aus einem textilen Gewebe besteht.

3. Sitz nach Anspruch 2, **dadurch gekennzeichnet, dass** das textile Gewebe ein ballistisches Schutzmaterial ist und/oder in das textile Gewebe ein zusätzlicher Splitterschutz eingebracht ist.

4. Sitz nach einem der Ansprüche 1 bis 3, **dadurch gekennzeichnet, dass** die seitliche Führung des Aufhängungsgestänges (1) mittels Lagerrollen (4) erfolgt.

5. Sitz nach einem der Ansprüche 1 bis 3, **dadurch gekennzeichnet, dass** die seitliche Führung des Aufhängungsgestänges (1) mittels einer Gurtverspannung (4) gegen die Seitenwand erfolgt.

6. Sitz nach einem der vorstehenden Ansprüche, **dadurch gekennzeichnet, dass** der elastische Aufhängungsgurt (6) zumindest eine Schlinge (11), die mit einer definierten Reißfestigkeit separat vernäht ist, als energieaufzehrende Sollbruchstelle aufweist.

7. Sitz nach einem der vorstehenden Ansprüche, **dadurch gekennzeichnet, dass** der elastische Aufhängungsgurt (6) am oberen Ende (22) an der Aufhängung (2) am Fahrzeugdach (3) eingehängt ist und einfach ausgehängt werden kann.

8. Sitz nach einem der vorstehenden Ansprüche, **dadurch gekennzeichnet, dass** der u-förmige Sitzrahmen (10) ergonomisch geformt ist und automatisch bei Nichtbenützung des Sitzes zusammen mit der Sitzbespannung nach oben klappbar ist.

9. Sitz nach einem der vorstehenden Ansprüche, **dadurch gekennzeichnet, dass** eine Fußstütze (19) für die gegenüber Sitzenden auf dem Sitzrahmen (10) unter der Sitzfläche angebracht ist.

10. Sitz nach Anspruch 9, **dadurch gekennzeichnet, dass** die Fußstütze (19) bei Nichtbedarf wegklappbar ist.

11. Sitz nach Anspruch 9 oder 10, **dadurch gekennzeichnet, dass** die Fußstütze (19) teleskopartig verlängerbar ist.

12. Sitz nach einem der vorstehenden Ansprüche, **dadurch gekennzeichnet, dass** das Rückhaltesystem (12) am Sitzrahmen (10) fixiert ist, und über eine Umlenkung über die Hinterseite der Rückenlehne (7) zu Sitzlehnendurchtritten geführt wird.

13. Sitz nach Anspruch 12, **dadurch gekennzeichnet, dass** das Rückhaltesystem (12) aus einem einstellbaren Hosenträgergurt (13) und einem Bauchgurt (14) besteht.

14. Sitz nach einem der vorstehenden Ansprüche, **dadurch gekennzeichnet, dass** in das Rückhaltesystem (12) eine gepolsterte Kopfstütze (17) integriert ist, die den Hals zumindest vorne und an der Seite umschließt.

15. Sitz nach Anspruch 14, **dadurch gekennzeichnet, dass** die Kopfstütze (17) auf den Hosenträgergurt (13) aufgesteckt und einfach abnehmbar ist.

16. Sitz nach Anspruch 14, **dadurch gekennzeichnet, dass** die Kopfstütze (17) aus einem Kunststoffformschaum besteht.

## Claims

1. Seat for an armoured vehicle, which, for protection against land mines, has an upper support (2), a seat cover (6, 7, 8, 9), a retention system (12) and a support rod assembly (1), which is fully decoupled from the vehicle floor (18) and is guided laterally in the vertical direction, wherein the seat cover (6, 7, 8, 9) has a seat area (8) and a backrest (7) and wherein a U-shaped seat frame (10), over which the seat area (8) of the seat cover is stretched, is mounted on the support rod assembly (1) in an articulated manner, **characterized in that** the support rod assembly (1) can be fixed to the vehicle roof (3) by means of an articulated support (2), **in that** the seat cover has two lateral webs (9) and elastic support straps (6) sewn thereto, and **in that** the U-shaped seat frame is delimited in its lowest position by the elastic support straps (6) of the seat cover (6, 7, 8, 9), which straps can be fixed to the vehicle roof (3) by means of the support (2).

2. Seat according to Claim 1, **characterized in that** the seat cover (6, 7, 8, 9) consists of a textile fabric.

3. Seat according to Claim 2, **characterized in that** the textile fabric is a ballistic protection material and/or an additional splinter protection is incorporated into the textile fabric.

4. Seat according to one of Claims 1 to 3, **characterized in that** the lateral guiding of the support rod assembly (1) takes place by means of bearing rollers (4).

5. Seat according to one of Claims 1 to 3, **characterized in that** the lateral guiding of the support rod assembly (1) takes place by means of a strap bracing (4) against the side wall.

6. Seat according to one of the previous claims, **characterized in that** the elastic support strap (6) has at least one loop (11) which is sewn separately with a defined tear strength as an energy-consuming predetermined breaking point.

7. Seat according to one of the previous claims, **characterized in that** the upper end (22) of the elastic support strap (6) is hung on and can simply be taken down from the support (2) on the vehicle roof (3).

8. Seat according to one of the previous claims, **characterized in that** the U-shaped seat frame (10) is shaped ergonomically and can automatically be folded upwards together with the seat covering when the seat is not being used.

9. Seat according to one of the previous claims, **characterized in that** a footrest (19) for the person seated opposite is attached to the seat frame (10) under the seat area.

10. Seat according to Claim 9, **characterized in that** the footrest (19) can be folded away if not needed.

11. Seat according to Claim 9 or 10, **characterized in that** the footrest (19) can be elongated telescopically.

12. Seat according to one of the previous claims, **characterized in that** the retention system (12) is fixed to the seat frame (10) and guided, via a redirection, over the rear of the backrest (7) to slits in the seat back.

13. Seat according to Claim 12, **characterized in that** the retention system (12) consists of an adjustable shoulder harness (13) and a lap belt (14).

14. Seat according to one of the previous claims, **characterized in that** a padded head restraint (17), which surrounds the neck at least at the front and at the side, is integrated into the retention system (12).

15. Seat according to Claim 14, **characterized in that** the head restraint (17) is put on the shoulder restraint (13) and can be removed simply.

16. Seat according to Claim 14, **characterized in that** the head restraint (17) consists of a moulded plastic foam.

## Revendications

1. Siège pour un véhicule blindé, qui présente pour la protection contre les mines terrestres une suspension (2) supérieure et une housse de siège (6, 7, 8, 9), un système de retenue (12) et une tringle de suspension (1) parfaitement dissociée du plancher du véhicule (18), qui est guidée latéralement dans la direction verticale, la housse de siège (6, 7, 8, 9) présentant une assise (8) et un dossier (7) et un châssis de siège (10) en U étant fixé de façon articulée sur la tringle de suspension (1), par lequel l'assise (8) de la housse de siège est tendue, **caractérisé en ce que** la tringle de suspension (1) peut être fixée au moyen d'une suspension (2) articulée sur le toit du véhicule (3), **en ce que** la housse du siège présente deux joues (9) latérales et des ceintures de suspension (6) élastiques et cousues avec les joues, et **en ce que** le châssis de dossier en U est limité dans sa position inférieure par les ceintures de suspension (6) élastiques de la housse de siège (6, 7, 8, 9) qui peuvent être fixées sur le toit de véhicule (3) sur la suspension (2).

2. Siège selon la revendication 1, **caractérisé en ce que** la housse de siège (6, 7, 8, 9) est à base d'un tissu textile.

3. Siège selon la revendication 2, **caractérisé en ce que** le tissu textile est un matériau de protection balistique et/ou une protection supplémentaire contre les éclats est introduite dans le tissu textile.

4. Siège selon l'une quelconque des revendications 1 à 3, **caractérisé en ce que** le guidage latéral de la tringle de suspension (1) s'effectue au moyen de rouleaux de support (4).

5. Siège selon l'une quelconque des revendications 1 à 3, **caractérisé en ce que** le guidage latéral de la tringle de suspension (1) s'effectue au moyen d'une tension de sangle (4) contre la paroi latérale.

6. Siège selon l'une quelconque des revendications précédentes, **caractérisé en ce que** la ceinture de suspension (6) élastique présente au moins une boucle (11), qui est cousue séparément avec une résistance au déchirement défini, comme point de rupture théorique consommant de l'énergie.

7. Siège selon l'une quelconque des revendications précédentes, **caractérisé en ce que** la ceinture de suspension (6) élastique est accrochée sur l'extrémité (22) supérieure sur la suspension (2) sur le toit de véhicule (3) et peut être décrochée de façon simple.

8. Siège selon l'une quelconque des revendications précédentes, **caractérisé en ce que** le châssis du siège (10) en U est formé de façon ergonomique et peut être plié vers le haut automatiquement en cas de non-utilisation du siège en même temps que le revêtement du siège.

9. Siège selon l'une quelconque des revendications précédentes, **caractérisé en ce qu'**un repose-pied (19) pour les personnes assises en face est placé sur le châssis de siège (10) sous l'assise.

10. Siège selon la revendication 9, **caractérisé en ce que** le repose-pied (19) peut être replié en cas de non-utilisation.

11. Siège selon la revendication 9 ou 10, **caractérisé en ce que** le repose-pied (19) peut être allongé de façon télescopique.

12. Siège selon l'une quelconque des revendications précédentes, **caractérisé en ce que** le système de retenue (12) est fixé sur le châssis du siège (10), et est guidé au moyen d'un renvoi par le côté arrière du dossier (7) dans des passages du dossier de siège.

13. Siège selon la revendication 12, **caractérisé en ce que** le système de retenue (12) comprend une ceinture à bretelles (13) réglable et une ceinture ventrale (14).

14. Siège selon l'une quelconque des revendications précédentes, **caractérisé en ce qu'**un appui-tête (17) rembourré, qui entoure le cou au moins à l'avant et sur le côté, est intégré dans le système de retenue (12).

15. Siège selon la revendication 14, **caractérisé en ce que** l'appui-tête (17) est emboîté sur la ceinture à bretelles (13) et est amovible de façon simple.

16. Siège selon la revendication 14, **caractérisé en ce que** l'appui-tête (17) est à base d'une mousse moulée en matière synthétique.
